# EUROPÄISCHE PATENTSCHRIFT

(11) **EP 0 560 005 B1**
(45) Veröffentlichungstag und Bekanntmachung des Hinweises auf die Patenterteilung: **26.07.1995**
(21) Anmeldenummer: 93100075.6
(22) Anmeldetag: 05.01.1993
(51) Int. Cl.: C01B 21/068, C01B 21/097

(54) **Verfahren zur Herstellung von Siliciumnitrid, Ausgangsverbindung hierfür sowie Verfahren zu dessen Herstellung**
Process for the preparation of silicon nitride, starting material therefor and process for its preparation
Procédé de préparation de nitrure de silicium, composé de départ utilisé à cet effet et son procédé de préparation

(30) Priorität: 15.01.1992 DE 4200787
(43) Veröffentlichungstag der Anmeldung: 15.09.1993
(73) Patentinhaber: BAYER AG, 51368 Leverkusen (DE)
(72) Erfinder: Baldus, Hans-Peter, Dr., W-5093 Burscheid (DE); Schnick, Wolfgang, Dr., W-5300 Bonn (DE)

(56) Entgegenhaltungen:
- EP-A- 0 219 764
- EP-A- 0 251 322
- EP-A- 0 361 061
- JOURNAL GENERAL CHEMISTRY USSR Bd. 49, 1979, Seiten 302 - 305 L.P. FILONENKO AND A.M. PINCHUK 'N-(chlorophosphoranylidene)silylamines'

## Beschreibung

Die vorliegende Erfindung betrifft ein Verfahren zur Herstellung von nadelarmem Siliciumnitrid mit hohem α-Gehalt, eine silicium-, stickstoff- und phosphorhaltige Verbindung als Ausgangssubstanz sowie ein Verfahren zu dessen Herstellung.

Kristallines Siliciumnitridpulver für ingenieurkeramische Anwendungen erhält man im allgemeinen durch thermische Zersetzung von Siliciumdiimid oder durch Kristallisation von amorphem Siliciumnitrid bei ca. 1450°C. Das Calcinationsprodukt enthält in der Regel mehr als 80 % α-Siliciumnitrid. Der Rest besteht, abhängig von dem Halogen- und Sauerstoffgehalt der Edukte sowie der Temperatur, aus β-Siliciumnitrid und amorphen Anteilen.

Auf diese Weise hergestelltes Siliciumnitridpulver besitzt in der Regel weiterhin einen hohen Anteil an großen (>2 »m) nadelförmigen bzw. säulenförmigen Kristallen, die größtenteils aus der β-Phase bestehen. Dieser Umstand ist nachteilig bei der Verwendung eines solchen Pulvers zur Herstellung von Sinterkörpern. Denn bei einem großen Anteil an nadelförmigen Kristallen wird eine geringe Gründichte erreicht, was eine niedrige Dichte des gesinterten Werkstückes zur Folge hat. Solche Sinterkörper haben dann aufgrund ihrer hohen Restporosität geringe Festigkeiten und Bruchzähigkeiten.

Demzufolge sollte Si₃N₄-Pulver, das für Ingenieurkeramik benutzt wird, zumindest einen α-Gehalt von 90 % aufweisen und möglichst keine oder nur sehr wenige Nadeln aufweisen. Am günstigsten sind sphärische Partikel mit einer Teilchengröße von unter 1 »m.

In der US-A-4 770 830 wird ein Verfahren zur Herstellung von nadelfreiem Si₃N₄ mit einem α-Gehalt von >90 % beschrieben. In diesem Verfahren wird eine geringe Menge von kristallinem Siliciumnitrid (ca 5 %) zu dem amorphen Vorprodukt gegeben. Das zugesetzte kristalline Pulver muß einen α-Gehalt von größer 90 % sowie einen hohen Anteil an besonders feinteiligem Pulver besitzen. Der Anteil der Teilchen mit einer Größe <0,05 »m an dem Gesamtgewicht aus Zuschlag und zu calcinierendem Produkt muß sich auf mindestens 0,1 Gew.-% belaufen. Weiterhin muß die Aufheizrate zwischen 1200 und 1350°C mindestens 15°C/min betragen.

Die nach diesem Verfahren erreichbaren α-Gehalte und Teilchengrößen werden als zufriedenstellend bezeichnet. Die Zugabe von α-Si₃N₄-Kristallisationskeimen vermindert jedoch nicht den intragranularen Sauerstoff- bzw. Halogengehalt der Ausgangspulver. Pulver, die nach dem Diimidverfahren hergestellt werden, enthalten nämlich noch einen gewissen Prozentsatz intragranularen Sauerstoff, der die Nadelbildung begünstigt und somit auf die Sintereigenschaften einen negativen Einfluß ausübt.

In der EP-A-251 322 wird ein Verfahren zur Abreicherung von Sauerstoff aus nichtoxidischen keramischen Pulvern beschrieben. Dies geschieht durch Zufügen eines PTFE-Harzes und anschließende Erhitzung des Pulvers. Dabei zersetzt sich das Harz und der im keramischen Pulver enthaltene Sauerstoff entweicht in Form von gasförmigen Fluorverbindungen. Bei diesem Verfahren wird der Gehalt an Halogenen erhöht. Diese entweichen erst beim Sinterprozeß aus dem keramischen Material und führen dabei zu einer Porenbildung, die zu einer geringeren Festigkeit der resultierenden Formkörper führt.

Si₃N₄-Pulver, die nach einem Gasphasenverfahren hergestellt wurden, enthalten noch chemisch gebundenes Chlor, das ebenfalls einen negativen Einfluß auf die Sinterfähigkeit bzw. die Festigkeit der resultierenden Formkörper ausüben soll.

Aufgabe der vorliegenden Erfindung ist die Bereitstellung von Stoffen und Verfahren, welche in einem Schritt sowohl die Kristallisation einer amorphen, stickstoffhaltigen Silanverbindung zu kristallinem Siliciumnitrid mit einem α-Gehalt >90 % gewährleisten, als auch intragranularen Sauerstoff und chemisch gebundenes Chlor aus dem Pulver entfernen.

Die Aufgabe wird gelöst durch ein Verfahren, in dem eine amorphe, stickstoffhaltige Silanverbindung, z.B. Siliciumdiimid, mit einer geringen Menge einer kristallinen oder amorphen Verbindung, die mindestens die Elemente Si, P und N enthält, vermischt wird und anschließend einer Temperaturbehandlung unterzogen wird.

Gegenstand dieser Erfindung ist somit ein Verfahren zur Herstellung von nadelarmem Siliciumnitrid mit hohem α-Gehalt, welches dadurch gekennzeichnet ist, daß eine amorphe, stickstoffhaltige Silanverbindung mit einer kristallinen oder amorphen Verbindung, die mindestens aus den Elementen Silicium, Phosphor und Stickstoff besteht, vermischt wird, und die Mischung einer Temperaturbehandlung oberhalb 1000°C unterzogen wird.

Besonders bevorzugt ist die Verbindung in kristalliner Form.

In einer bevorzugten Ausführungsform dieses Verfahrens weist die silicium-, stickstoff- und phosphorhaltige Verbindung die Zusammensetzung Si₂₋ₓPₓN₂₊ₓ(NH)₁₋ₓ (x = 0,1-1) auf. Entsprechende Verbindungen sind ebenfalls Gegenstand dieser Erfindung.

Das Verfahren ist besonders vorteilhaft durchführbar, wenn der zugesetzte Anteil der stickstoff-, phosphor- und siliciumhaltigen kristallinen oder amorphen Verbindung mindestens 0,1 % bis 20 Gew.-% beträgt und die Temperaturbehandlung zwischen 1250 und 1700°C für mindestens 5 min durchgeführt wird. Die bei der Zersetzung der erfindungsgemäß zugesetzten Verbindung erzeugten α-Si₃N₄-Keime initiieren dann die Umwandlung der amorphen stickstoffhaltigen Silanverbindung in nadelfreies, feinteiliges α-Siliciumnitrid. Das zweite Zersetzungsprodukt, der bei diesen Temperaturen anfallende Phosphor, reagiert mit dem noch im Produkt vorhandenen Sauerstoff bzw. Chlor zu gasförmigen Phosphoroxiden bzw. -chloriden, die über einen Gasstrom aus dem Produkt entfernt werden. Die Entfernung von Sauerstoff bzw. Chlor gelingt umso effektiver, je mehr Siliciumphosphornitrid zugesetzt wird.

Die Temperaturbehandlung der Pulvermischung sollte bevorzugt in einer Stickstoffatmosphäre stattfinden, da in Argon oder im Vakuum ein Teil des Siliciumnitrides sich in Silicium und Stickstoff zersetzen könnte.

Wenn der Sauerstoffgehalt des so behandelten Siliciumnitridpulvers zu niedrig sein sollte (für eine gute Sinterfähigkeit ist ein Gesamtsauerstoffgehalt von ca. 1 bis 1,5 %, konzentriert auf der Kornoberfläche, notwendig), kann das kristalline Pulver zur Erreichung des benötigten Oberflächensauerstoffgehaltes mit bekannten Methoden nachbehandelt werden. Mit dieser gezielten Anreicherung ist sichergestellt, daß sich der gesamte Sauerstoffanteil des Pulvers nur auf der Oberfläche befindet.

Gegenstand dieser Erfindung sind auch besonders für das Verfahren geeignete silicium-, phosphor- und stickstoffhaltige Verbindungen, die die Zusammensetzung Si₂₋ₓPₓN₂₊ₓ(NH)₁₋ₓ (0,1 ≦ x ≦ 1) aufweisen, die aus einem dreidimensionalen Gitter bestehen und dabei sowohl Phosphor als auch Silicium tetraedrisch von Stickstoff bzw. (N-H)-Gruppen umgeben sind.

Die erfindungsgemäß hergestellten Produkte bestehen in den Hauptkomponenten aus Si, N und P und können in Spuren auch C, Cl, H und O enthalten. Das Material ist kristallin, kann aber auch noch amorphe Anteile enthalten. Der kristalline Anteil hat eine Phasenbreite, die zwischen den Zusammensetzungen Si_{1,9}P_{0,1}N_{2,2}(NH)_{0,9} und SiPN₃ liegt. Die genaue Zusammensetzung hängt von den jeweiligen Calcinierungsbedingungen ab.

Pulverdiffraktometeraufnahmen des erfindungsgemäßen Materials wurden mit CuK_{α1}-Strahlung (WL = 1,54056 Å) angefertigt unter Verwendung eines Stoe Stadi P Pulverdiffraktometers mit Germaniummonochromator und ortsempfindlichem Proportionalzähler. Die Netzebenenabstände (d), die aus den 2Θ-Positionen der Röntgenlinien ermittelt werden können, werden in Ångström angegeben. Θ entspricht dem Braggwinkel des Röntgenbeugungsmaximums. Die Intensitäten werden nach Abzug des Untergrundes aus der Höhe der Beugungsmaxima ermittelt. Die Werte von 2Θ hängen ebenso wie die aus ihnen ermittelten d-Werte von der genauen Zusammensetzung des Mischkristalls ab, außerdem sind sie immer mit einem gewissen apparativ bedingten Fehler behaftet, der bei den 2Θ-Werten ca. 0,4 beträgt. Trotzdem ist es im allgemeinen möglich, durch die Angabe der d-Werte bzw. 2Θ-Werte sowie der Intensitäten, eine kristalline Substanz anhand ihrer Röntgenreflexe eindeutig zu charakterisieren.

Typische Werte für die ersten acht Röntgenreflexe von Si₂₋ₓPₓN₂₊ₓ(NH)₁₋ₓ (x = 0,1-1) sind in der nachstehenden Tabelle 1 aufgeführt.

**Tabelle 1**

| d[Å] | 2Θ | Intensität |
|---|---|---|
| 4,56-4,51 | 19,46-19,63 | 280-320 |
| 4,51-4,49 | 19,63-19,75 | 850-1000 |
| 3,29-3,25 | 27,05-27,28 | 750-950 |
| 2,64-2,62 | 33,65-33,98 | 50-450 |
| 2,36-2,60 | 34,05-34,33 | 250-550 |
| 2,36-2,34 | 38,19-38,40 | 250-500 |
| 2,33-2,29 | 38,55-39,25 | 150-350 |
| 2,29-2,27 | 39,32-39,48 | 250-400 |

TGA-Messungen an Pulvern dieser Verbindung zeigen einen Zersetzungsbeginn bei ca. 750-900°C. Bei diesen Temperaturen sind die (P-N)-Bindungen nicht mehr stabil, so daß die Verbindung sich in eine amorphe silicium- und stickstoffhaltige Phase und P bzw. N₂ zersetzt. Die Zersetzung ist bei da. 1 250°C abgeschlossen, gleichzeitig beginnt die Kristallisation von α-Siliciumnitrid. Der relativ frühe Kristallisationsbeginn ist wahrscheinlich für die überwiegende Bildung von α-Si₃N₄-Kristallkeimen verantwortlich. Der Gewichtsverlust der erfindungsgemäßen Verbindungen bis zur Bildung von Siliciumnitrid beträgt je nach Zusammensetzung zwischen 8 und 54 %.

Die Herstellung der erfindungsgemäßen Verbindungen kann über eine Festkörperreaktion zwischen P₃N₅ und Siliciumdiimid bei 900°C erfolgen, allerdings sind bei dieser Methode die Reaktionszeiten sehr lange, und die Kristallinität des Produktes ist sehr gering.

Eine weitere Möglichkeit wäre, Mischungen aus SiCl₄ und PCl₅ oder metallorganische Verbindungen, die mindestens aus Phosphor, Silicium, Stickstoff und Halogen bestehen, mit NH₃ umzusetzen und anschließend einer Temperaturbehandlung zu unterwerfen.

Besonders gute Ergebnisse werden beim folgenden Verfahren, welches ebenfalls Gegenstand dieser Erfindung ist, erreicht. Dieses ist dadurch gekennzeichnet, daß elementorganische Verbindungen, die mindestens aus den Elementen Silicium, Phosphor, Stickstoff und Halogen bestehen, wobei der Stickstoff nur an Silicium und Phosphor und das Halogen nur an Silicium bzw. Phosphor gebunden ist, mit NH₃ umgesetzt werden und anschließend einer Temperaturbehandlung unterzogen werden.

Bevorzugt wird jedoch von der Verbindung Hexachlorsilylphosphinimin Cl₃Si-N=-PCl₃ (Verbindung A) ausgegangen, die erstmals von L.P. Filonenko und A.M. Pinchuk hergestellt worden ist (J. Gen. Chem. USSR 49, 302-305 (1979)).

Eine polymere Vorstufe der erfahrungsgemäßen Verbindung Si₂₋ₓPₓN₂₊ₓ(NH)₁₋ₓ (x=0,1 bis 1) entsteht durch Umsetzung der Verbindung A mit NH₃. Für diese Reaktion kann man alle literaturbekannten Ammonolyseverfahren von SiCl₄ nutzen, bevorzugt wird jedoch die Umsetzung mit flüssigem Ammoniak bei tiefen Temperaturen zwischen -100 und 0°C.

Eine weitere Ausführungsform des erfindungsgemäßen Verfahrens besteht darin, daß die elementorganische Verbindung anstelle des Ammoniaks ganz oder teilweise mit aliphatischen und aromatischen Aminen mit mindestens einer (N-H)-Gruppierung umgesetzt wird.

Nach dem Abtrennen des anfallenden Ammoniumchlorides bzw. Aminhydrochlorides durch bekannte Methoden wie Sublimation oder Waschen mit flüssigem Ammoniak wird ein polymeres Imid erhalten, das noch viele NH-, NH₂ bzw. NHR-Gruppen enthalt. Dieses polymere Imid wird anschließend erfindungsgemäß unter einem Ammoniakstrom bei Temperaturen zwischen 400 und 1 200°C, bevorzugt zwischen 500 und 950°C mindestens eine Stunde calciniert. Diese Temperaturbehandlung kann auch im Vakuum, in N₂ und/oder in Ar durchgeführt werden.

Nachfolgend wird die Erfindung anhand einiger Beispiele näher erläutert, ohne daß hierin eine Einschränkung zu sehen ist. Als Beweis für die Wirksamkeit des neuen Kristallisationshilfsmittels wurden Vergleichsversuche unter den gleichen experimentellen Bedingungen, wie in den Beispielen beschrieben, durchgeführt, jedoch ohne Zusatz eines Kristallisationshilfsmittels.

### Beispiele 1-2 und Vergleichsversuch 1:

Amorphes Siliciumnitridpulver wird aus SiCl₄ und Ammoniak bei hohen Temperaturen hergestellt. Nach der Entfernung des gebildeten Ammoniumchlorides durch Absublimation werden 500 g dieses Pulvers mit einer bestimmten Menge der Verbindung Si₂₋ₓPₓN₂₊ₓ(NH)₁₋ₓ (x=0,1-1) vermischt und vier Stunden bei ca. 1 450°C calciniert.

### Beispiele 3-4 und Vergleichsversuch 2:

Amorphes Siliciumdiimidpulver wird aus SiCl₄ und Ammoniak in einem organischen Lösungsmittel bei tiefen Temperaturen hergestellt. Zur Entfernung des gebildeten Ammoniumchlorids wird das Produkt mit flüssigem Ammoniak gewaschen. Anschließend werden 500 g des Diimids mit einer bestimmten Menge der Verbindung Si₂₋ₓPₓ(NH)₁₊ₓ(x=0,1-1) vermischt und vier Stunden bei ca. 1 450°C calciniert.

Die Analysedaten der Pulvermischungen vor der Calcinierung sowie die Versuchsparameter sind in Tabelle 2 aufgeführt. Die entsprechenden Werte nach der Calcinierung sind in Tabelle 3 zusammengefaßt.

**Tabelle 2**

| Beispiel | zugesetzte Menge [g] | X | Cl-Gehalt [Gew.-%] | O-Gehalt [Gew.-%] |
|---|---|---|---|---|
| 1 | 2,5 | 0,8 | 0,5 | 0,8 |
| 2 | 10 | 0,9 | 0,07 | 0,8 |
| V1 | -- | -- | 0,3 | 0,6 |
| 3 | 2,5 | 0,8 | 0,05 | 1,9 |
| 4 | 10 | 0,9 | 0,03 | 1,6 |
| V2 | -- | -- | 0,03 | 1,6 |

**Tabelle 3**

| Beispiel | zugesetzte Menge [g] | X | Cl-Gehalt [Gew.-%] | O-Gehalt [Gew.-%] | α-Gehalt [Gew.-%] |
|---|---|---|---|---|---|
| 1 | 2,5 | 0,8 | 0,14 | 0,27 | 94 |
| 2 | 10 | 0,9 | 0,05 | 0,19 | 93 |
| V 1 | -- | -- | 0,2 | 0,5 | 85 |
| 3 | 2,5 | 0,8 | 0,01 | 1,0 | 95 |
| 4 | 10 | 0,9 | 0,008 | 0,4 | 96 |
| V2 | -- | -- | 0,02 | 1,4 | 89 |
| (V = Vergleichsversuch) | | | | | |

### Beispiel 5:Darstellung von Hexachlor-N-silylphosphinimin (A)

### 1. 1,1,1-Trichlor-3,3,3-trimethyldisilazan (A1)

Nach J.P. Moser, H. Nöth und W. Tinhof in Z. Naturforsch. B 29, 166 (1974) werden im 250 ml-Dreihalskolben 68, 98 (0,406 Mol) Siliciumtetrachlorid und 12,3 g (0,076 Mol) Hexamethyldisilazan zusammengegeben und 14 Stunden bei Raumtemperatur gerührt. Die anschließende fraktionierende Destillation über eine kurze Vigreuxkolonne ergibt 15 g (88 %) der farblosen Flüssigkeit.

### 2. 1,1,1,2-Tetrachlor-3,3,3-thrimethyldisilazan (A2)

Nach L.P. Filonenko und A.M. Pinchuk in J. Gen. Chem. USSR 49, 302 (1979) werden 13,8 g (0,063 Mol) der Verbindung A1 und 5,1 ml (0,063 Mol) Pyridin in 180 ml Tetrachlorkohlenstoff vorgelegt. 5 g (0,141 Mol) Chlor kondensiert man bei -40°C und überführt sie in das Reaktionsgefäß. Nach vierstündigem Rühren wird der Niederschlag abfiltriert, gewaschen und von den vereinigten Filtraten das Lösungsmittel abdestilliert. Die anschließende Fraktionierung führt zu 16,4 g der gelblichen Flüssigkeit A2 mit einer Ausbeute von 75 %.

### Hexachlor-N-silylphosphinimin (A)

Wie die eben beschriebene Chlorierung des Disilazans Al zu dem N-Chlordisilazan A2 erfolgt auch die Umsetzung von A2 mit Phosphortrichlorid in Anlehnung an L.P. Filonenko und A.M. Pinchuk. Dazu wird eine Mischung aus 13,4 g (0,052 Mol) A2 und 15,5 ml (0,175 Mol) Phosphortrichlorid vier Stunden unter Rückflußsieden erhitzt und danach über eine kurze Vigreuxkolonne fraktioniert. Man erhält 12,5 g des N-Silylphosphinimis A als klare Flüssigkeit in einer Ausbeute von 86 %.

Sdp. 71°C/10 Torr, ³¹P-NMR: δ(ppm) = 20,7, EI-MS: m/z = 285 (28 %) M⁺, 250 (100 %) [M-Cl]⁺.

### Beispiel 6: Darstellung von Si₂₋ₓPₓN₂₊ₓ(NH)₁₋ₓ (x=0,1-1)(I)

In einen 41-Kolben werden bei -70°C 2,5 l Ammoniak unter Inertbedingungen einkondensiert. Anschließend werden 472 g (1,66 Mol) der Verbindung A langsam bei -70°C unter starkem Rühren zugetropft. Es setzt eine stark exotherme Reaktion ein. Nach Beendigung der Zugabe wird noch 30 Min. bei -70°C nachgerührt.

Das entstandene Gemisch aus Verbindung I und Ammoniumchlorid wird in eine Umkehrfritte überführt und zur Abtrennung des Ammoniumchlorides drei Tage mit flüssigem Ammoniak extrahiert. Es bleiben 165,7 g eines rein weißen amorphen Pulvers in der Umkehrfritte zurück.

10 g dieses Pulvers werden in ein Bornitridschiffchen überführt und mit einer Aufheizrate von 10°C/Min. auf 800°C erhitzt. Bei dieser Temperatur wird es 10 h unter Ammoniakatmosphäre calciniert. Die Ausbeute an kristallinem, weißem I liegt bei 6,5 g.

Analysedaten: Si: 29,2 %, P: 26,7 %, N: 39,1 %, 0:0,9 %, Cl: 0,14 %, H: 0,2 %.

| Röntgendaten: | | |
|---|---|---|
| d[Å] | 2Θ | Intensität |
| 4,53 | 19,56 | 312 |
| 4,50 | 19,71 | 1000 |
| 3,27 | 27,26 | 879 |
| 2,64 | 33,93 | 326 |
| 2,61 | 34,26 | 515 |
| 2,35 | 38,20 | 439 |
| 2,31 | 38,95 | 158 |
| 2,28 | 39,48 | 397 |

## Patentansprüche

1. Verfahren zur Herstellung von nadelarmem Siliciumnitrid mit hohem α-Gehalt, dadurch gekennzeichnet, daß eine amorphe stickstoffhaltige Silanverbindung mit einer kristallinen oder amorphen Verbindung, die mindestens aus den Elementen Silicium, Phosphor und Stickstoff besteht, vermischt wird, und die Mischung einer Temperaturbehandlung oberhalb 1 000°C unterzogen wird.

2. Verfahren gemäß Anspruch 1, dadurch gekennzeichnet, daß die silicium-, stickstoff- und phosphorhaltige Verbindung die Zusammensetzung Si₂₋ₓPₓN₂₊ₓ(NH)₁₋ₓ(0,1 ≦ x ≦ 1) aufweist.

3. Verfahren gemäß einem der Ansprüche 1 oder 2, dadurch gekennzeichnet, daß der Anteil der silicium-, stickstoff- und phosphorhaltigen Verbindungen an der Gesamtmischung zwischen 0,1 und 20 Gew.-% liegt.

4. Verfahren gemäß einem oder mehreren Ansprüche 1 bis 3, dadurch gekennzeichnet, daß die Temperaturbehandlung zwischen 1 250 und 1 700°C für mindestens 5 Minuten durchgeführt wird.

5. Silicium-, Stickstoff- und phosphorhaltige Verbindungen, dadurch gekennzeichnet, daß sie die Zusammensetzung Si₂₊ₓPₓN₂₊ₓ(NH)₁₋ₓ (0,1 ≦ x ≦ 1) aufweisen, aus einem dreidimensionalen Gitter bestehen und dabei sowohl Phosphor als auch Silicium tetraedrisch von Stickstoff bzw. (N-H)-Gruppen umgeben sind.

6. Verbindungen gemäß Anspruch 5, dadurch gekennzeichnet, daß sie in kristalliner Form vorliegen und mindestens folgende Röntgenreflexe auftreten:
| d[Å] | 2Θ | Intensität |
|---|---|---|
| 4,56-4,51 | 19,46-19,63 | 280-320 |
| 4,51-4,49 | 19,63-19,75 | 850-1000 |
| 3,29-3,25 | 27,05-27,28 | 750-950 |
| 2,64-2,62 | 33,65-33,98 | 50-450 |
| 2,62-2,60 | 34,05-34,33 | 250-550 |
| 2,36-2,34 | 38,19-38,40 | 250-500 |
| 2,33-2,29 | 38,55-39,25 | 150-350 |
| 2,29-2,27 | 39,32-39,48 | 250-400 |

7. Verfahren zur Herstellung der Verbindung gemäß den Ansprüchen 5 oder 6, dadurch gekennzeichnet, daß elementorganische Verbindungen, die mindestens aus den Elementen Silicium, Phosphor, Stickstoff und Halogen bestehen, wobei der Stickstoff nur an Silicium und Phosphor und das Halogen nur an Silicium bzw. Phosphor gebunden ist, mit NH₃ umgesetzt werden und anschließend einer Temperaturbehandlung unterzogen werden.

8. Verfahren gemäß Anspruch 7, dadurch gekennzeichnet, daß die Verbindung Cl₃Si-N=PCl₃ mit Ammoniak umgesetzt wird und einer Temperaturbehandlung zwischen 400 und 1 200°C und bevorzugt zwischen 500 und 950°C in einer Ammoniakatmosphäre für mindestens eine Stunde unterzogen wird.

9. Verfahren gemäß einem der Ansprüche 7 oder 8, dadurch gekennzeichnet, daß die elementorganische Verbindung anstelle des Ammoniaks ganz oder teilweise mit aliphatischen und aromatischen Aminen mit mindestens einer (N-H)-Gruppierung umgesetzt wird.

10. Verfahren gemäß einem oder mehreren Ansprüche 7 bis 9, dadurch gekennzeichnet, daß die Temperaturbehandlung im Vakuum, in N₂, in He und/oder in Ar durchgeführt wird.

## Claims

1. A process for the production of low-needle silicon nitride of high α-content, characterized in that an amorphous nitrogen-containing silane compound is mixed with a crystalline or amorphous compound consisting at least of the elements silicon, phosphorus and nitrogen and the resulting mixture is heat-treated at temperatures above 1000°C.

2. A process as claimed in claim 1, characterized in that the silicon-, nitrogen- and phosphorus-containing compound has the composition Si₂₋ₓPₓN₂₊ₓ(NH)₁₋ₓ (0.1 ≦ x ≦ 1).

3. A process as claimed in claim 1 or 2, characterized in that the percentage content of the silicon-, nitrogen- and phosphorus-containing compounds in the mixture as a whole is between 0.1 and 20% by weight.

4. A process as claimed in one or more of claims 1 to 3, characterized in that the heat treatment is carried out for at least 5 minutes at temperatures of 1250 to 1700°C.

5. Silicon-, nitrogen- and phosphorus-containing compounds, characterized in that they have the composition Si₂₋ₓPₓN₂₊ₓ(NH)₁₋ₓ (x = 0.1-1) and consist of a three-dimensional network in which both the phosphorus and the silicon are tetrahedrally surrounded by nitrogen or (N-H) groups.

6. Compounds as claimed in claim 5, characterized in that they are present in crystalline form and at least the following X-ray reflexes occur:
| d[Å] | 2Θ | Intensity |
|---|---|---|
| 4.56-4.51 | 19.46-19.63 | 280-320 |
| 4.51-4.49 | 19.63-19.75 | 850-1000 |
| 3.29-3.25 | 27.05-27.28 | 750-950 |
| 2.64-2.62 | 33.65-33.98 | 50-450 |
| 2.36-2.60 | 34.05-34.33 | 250-550 |
| 2.36-2.34 | 38.19-38.40 | 250-500 |
| 2.33-2.29 | 38.55-39.25 | 150-350 |
| 2.29-2.27 | 39.32-39.48 | 250-400 |

7. A process for the production of the compound claimed in claim 5 or 6, characterized in that organoelemental compounds consisting at least of the elements silicon, phosphorus, nitrogen and halogen, the nitrogen being attached solely to silicon and phosphorus and the halogen being attached solely to silicon or phosphorus, are reacted with NH₃ and the reaction product is subsequently heat-treated.

8. A process as claimed in claim 7, characterized in that the compound Cl₃Si-N=PCl₃ is reacted with ammonia and is then heat-treated for at least one hour in an ammonia atmosphere at temperatures of 400 to 1200°C and preferably at temperatures of 500 to 950°C.

9. A process as claimed in claim 7 or 8, characterized in that, instead of ammonia, the organoelemental compound is completely or partly reacted with aliphatic and aromatic amines containing at least one (N-H) group.

10. A process as claimed in one or more of claims 7 to 9, characterized in that the heat treatment is carried out in vacuo, in nitrogen, in helium and/or in argon.

## Revendications

1. Procédé pour préparer du nitrure de silicium à forte teneur en phase α et faible teneur en aiguilles, caractérisé en ce que l'on mélange un dérivé azoté amorphe de silane avec un composé cristallin ou amorphe consistant au moins en les éléments silicium, phosphore et azote puis on soumet le mélange à un traitement en température, à des températures supérieures à 1000°C.

2. Procédé selon la revendication 1, caractérisé en ce que le composé contenant du silicium, de l'azote et du phosphore possède la composition Si₂₋ₓPₓN₂₊ₓ(NH)₁₋ₓ(0,1 ≦ x ≦ 1).

3. Procédé selon l'une des revendications 1 ou 2, caractérisé en ce que la proportion du composé contenant du silicium, de l'azote et du phosphore dans le mélange total est de 0,1 à 20 % en poids.

4. Procédé selon une ou plusieurs des revendications 1 à 3, caractérisé en ce que le traitement en température est réalisé entre 1250 et 1700°C pendant une durée d'au moins 5 min.

5. Composés contenant du silicium, de l'azote et du phosphore caractérisés en ce qu'ils ont la composition Si₂₊ₓPₓN₂₊ₓ(NH)₁₋ₓ (0,1 ≦ x ≦ 1), ils consistent en un réseau tridimensionnel dans lequel le phosphore et le silicium sont entourés par des tétraèdres d'azote ou de groupes (N-H).

6. Composés selon la revendication 5, caractérisés en ce qu'ils sont à l'état cristallin et provoquent au moins les réflexions suivantes des rayons X :
| d[Å] | 2Θ | Intensité |
|---|---|---|
| 4,56-4,51 | 19,46-19,63 | 280-320 |
| 4,51-4,49 | 19,63-19,75 | 850-1000 |
| 3,29-3,25 | 27,05-27,28 | 750-950 |
| 2,64-2,62 | 33,65-33,98 | 50-450 |
| 2,62-2,60 | 34,05-34,33 | 250-550 |
| 2,36-2,34 | 38,19-38,40 | 250-500 |
| 2,33-2,29 | 38,55-39,25 | 150-350 |
| 2,29-2,27 | 39,32-39,48 | 250-400 |

7. Procédé de préparation du composé selon les revendications 5 ou 6, caractérisé en ce que l'on fait réagir avec NH₃ des composés organiques élémentaires consistant au moins en les éléments silicium, phosphore, azote et halogène, l'azote étant fixé uniquement sur le silicium et le phosphore et l'halogène uniquement sur le silicium ou le phosphore, puis on soumet à un traitement en température.

8. Procédé selon la revendication 7, caractérisé en ce que l'on fait réagir avec l'ammoniac le composé Cl₃Si-N=PCl₃ puis on traite en température entre 400 et 1200°C, de préférence entre 500 et 950°C en atmosphère d'ammoniac pendant au moins une heure.

9. Procédé selon une des revendications 7 ou 8, caractérisé en ce que, au lieu de le faire réagir avec l'ammoniac, on fait réagir le composé organique élémentaire en totalité ou en partie avec des amines aliphatiques et aromatiques contenant au moins un groupement (N-H).

10. Procédé selon une ou plusieurs des revendications 7 à 9, caractérisé en ce que le traitement en température est réalisé sous vide, en atmosphère d'azote, d'hélium et/ou d'argon.
